# FASCICULE DE BREVET EUROPEEN

(11) **EP 1 936 354 B1**
(45) Date de publication et mention de la délivrance du brevet: **08.07.2009**
(21) Numéro de dépôt: 07119755.2
(22) Date de dépôt: 31.10.2007
(51) Int. Cl.: G01N 17/00, G01M 19/00, F02K 9/96

(54) **Dispositif et procédé d'essai thermo-érosif pour des matériaux de protections thermiques de propulseurs à propergol solide**
Vorrichtung und Verfaren zur wärme-erosiven Prüfung von Wärmeabschirmungs-Materialien für Feststoffraketen.
Apparatus and method for thermo-erosive testing of materials used as thermal shields for solid propellant rockets.

(30) Priorité: 21.12.2006 FR 0655802
(43) Date de publication de la demande: 25.06.2008
(73) Titulaire: Snecma Propulsion Solide, 33187 Le Haillan Cedex (FR); SNPE Matériaux Energétiques, 75004 Paris (FR)
(72) Inventeur: Deoclezian, Jean-Marc, 33160, ST MEDARD EN JALLES (FR); Plazanet, Frédéric, 33460, ARSAC (FR); Nguyen, Caroline, 91380, CHILLY MAZARIN (FR); Bodart, Vincent, 75014, PARIS (FR)
(74) Mandataire: Desormiere, Pierre-Louis

(56) Documents cités:
- US-A- 3 391 102
- US-A- 6 054 521
- CAUTY F: "ULTRASONIC METHOD APPLIED TO FULL-SCALE SOLID ROCKET MOTORS" JOURNAL OF PROPULSION AND POWER, AMERICAN INSTITUTE OF AERONAUTICS AND ASTRONAUTICS. NEW YORK, US, vol. 16, no. 3, mai 2000 (2000-05), pages 523-528, XP000935381 ISSN: 0748-4658

## Description

### Arrière plan de l'invention

La présente invention concerne le domaine des matériaux de protection thermique destinés à être utilisés dans des propulseurs à propergol solide. Plus précisément, l'invention concerne les moyens d'essai et de modélisation permettant de caractériser le comportement thermo-érosif des protections thermiques réalisées à partir de ces matériaux dans des conditions représentatives de celles auxquelles elles seront soumises dans le propulseur "échelle 1" (grandeur nature).

Les performances d'une protection thermique sont évaluées en fonction de son comportement "thermo-érosif" vis-à-vis des gaz issus de la combustion du propergol solide. Lors de la combustion du propergol dans le propulseur, les parties du matériau de protection thermique qui sont exposées à l'écoulement des gaz de combustion se dégradent en surface sous l'effet des températures élevées en formant du coke, le coke ainsi formé subissant une érosion plus ou moins importante en fonction de son degré d'exposition à l'écoulement et de la vitesse du flux. Le comportement thermo-érosif d'un matériau de protection thermique correspond à l'évaluation de sa capacité à résister aux températures et aux efforts aérodynamiques rencontrés dans le propulseur.

Le document US 3,391,102 décrit un dispositif comprenant un chambre cylindrique au centre de laquelle est disposé un bloc cylindrique de propergol solide, la face interne de la chambre étant tapissée d'une couche de materiau dont on cherche à mesurer les propriétés thermo-érosives.

Une des méthodes actuellement utilisée pour caractériser le comportement thermo-érosif des protections thermiques internes pour propulseurs à propergol solide consiste en un outil de modélisation basé sur une loi semi-empirique (critère d'érosion) définie à partir de résultats expérimentaux obtenus sur des essais de propulseurs à l'échelle 1 et pour un type de matériau spécifique. Par conséquent, l'outil de modélisation développé ne peut servir qu'à la caractérisation du comportement thermo-érosif de protections thermiques réalisées avec le matériau à partir duquel les essais à l'échelle 1 ont été réalisés.

Cependant, afin d'améliorer le comportement thermo-érosif des protections thermiques internes dans les propulseurs permettant d'en réduire les coûts et/ou la masse, on cherche à développer de nouvelles protections thermiques utilisant de nouveaux matériaux pouvant correspondre soit à des matériaux de nature différente, soit à des matériaux de même nature auxquels des évolutions significatives ont été apportées. Dans les deux cas, le modèle disponible pour le calcul thermo-érosif n'est pas exploitable étant donné qu'il est basé sur un critère d'érosion défini à partir d'un matériau spécifique. En conséquence, pour chaque nouveau matériau, il faut réaliser un ou plusieurs essais à l'échelle 1 de manière à déterminer un critère d'érosion et disposer d'un modèle de calcul adapté aux caractéristiques du matériau considéré.

Cette nécessité d'effectuer un ou plusieurs essais à l'échelle 1 empêche la réalisation à moindre coût d'études préalables permettant d'évaluer les gains (performances et coût) qui pourraient être apportés par l'utilisation d'un nouveau matériau et le dimensionnement par calcul (modélisation) à l'échelle 1 des protections thermiques à réaliser avec ce nouveau matériau dans un propulseur.

Il existe, par conséquent, un besoin pour permettre la réalisation d'essais à moindre coût, c'est-à-dire à une échelle réduite, permettant de s'affranchir de la nécessité de tirs d'essai à l'échelle 1.

Un tel dispositif est connu de US 6,054,521. Il comprend une première chambre dans laquelle est disposé un bloc de propergol solide et une seconde chambre, située en aval de la première chambre, dans laquelle est disposé un bloc de matériau de protection thermique.

Les moyens d'essai à échelle réduite existants utilisés pour caractériser le comportement thermo-érosif des matériaux de protection thermique utilisent des rallonges cylindriques de faible diamètre (environ 200 mm). Cependant, les expertises de ces essais montrent que les aspects des matériaux cokéfiés et les niveaux d'érosion relevés lors de ces essais sont différents de ceux observés sur des propulseurs à l'échelle 1. Si ces essais permettent une étude comparative entre deux matériaux, ils ne sont pas représentatifs d'un comportement à l'échelle 1 et ne peuvent, par conséquent, servir de base pour l'élaboration d'un modèle de calcul permettant d'évaluer et de dimensionner des protections thermiques destinées à être utilisées dans un propulseur à l'échelle 1.

### Objet et résumé de l'invention

La présente invention a pour but de proposer un moyen d'essai à échelle réduite qui permet de caractériser le comportement thermo-érosif d'un matériau de protection thermique, ce comportement étant représentatif de celui d'une protection thermique utilisant ce matériau dans un propulseur à l'échelle 1.

A cet effet, la présente invention propose un dispositif d'essai thermo-érosif de matériau de protection thermique destiné à être utilisé dans un propulseur à propergol solide, caractérisé en ce qu'il comprend des moyens pour maintenir une plaque constituée du matériau de protection thermique à tester en regard d'une face d'un bloc de propergol solide, l'espace entre la plaque et la face du bloc de propergol définissant une chambre de combustion de forme sensiblement parallélépipédique, ladite chambre s'étendant le long de ladite plaque et débouchant dans une tuyère.

Le dispositif d'essai de la présente invention permet ainsi d'exposer une plaque d'un matériau de protection thermique à un écoulement tangentiel de gaz de combustion généré par un bloc de propergol placé en vis-à-vis de ladite plaque. Cette configuration permet d'effectuer des tests dans des conditions proches de celles de l'échelle 1. En effet, la demanderesse a constaté que l'utilisation d'une plaque plane pour le matériau à tester dans un dispositif définissant une veine d'écoulement sensiblement parallélépipédique qui s'étend le long de la plaque permet de reproduire des conditions proches de celles rencontrées par les protections thermiques internes dans des propulseurs en particulier en raison du fait que les rayons de courbure sont importants à l'échelle 1.

Dans les moyens d'essai de l'art antérieur utilisant des rallonges cylindriques, les rayons de courbure sont faibles. Le comportement thermo-érosif d'une protection thermique dans de tels moyens d'essai est différent de celui à l'échelle 1 notamment en raison des "effets de bords" qui conduisent à une formation (structure) et une érosion de coke sur la protection thermique différentes de celles observées à l'échelle 1 pour laquelle ces effet sont peu significatifs.

L'utilisation d'une plaque est, par conséquent, bien plus représentative d'une partie d'une protection thermique interne à l'échelle 1 disposée dans un propulseur présentant un rayon de courbure important.

En outre, la chambre de combustion du dispositif d'essai de l'invention s'étend le long de la plaque du matériau à tester qui est elle-même en regard du bloc de propergol. Cette configuration permet d'avoir différents niveaux de sollicitation sur la face de la plaque exposée, l'écoulement des gaz de combustion du bloc de propergol étant plus important et plus rapide au fur et à mesure que l'on se rapproche de la tuyère d'éjection des gaz. Aussi, il est possible d'avoir à différents endroits répartis sur la longueur de la plaque des zones de sollicitations différentes qui sont directement représentatives de certaines parties du propulseur.

Selon un aspect de l'invention, le dispositif comprend des moyens pour mesurer l'évolution de la dégradation et de la récession de la surface de la plaque du matériau de protection thermique à tester.

Le dispositif peut comprendre une pluralité de capteurs à ultrasons disposés le long de la plaque du matériau de protection thermique à tester, lesdits capteurs étant couplés avec ladite plaque par un matériau de couplage. Ces capteurs permettent de suivre le front de dégradation du matériau tout au long d'un tir et à différents endroits de la plaque correspondant à des zones de sollicitations différentes. Le dispositif peut comprendre en outre une pluralité de jauges capacitives à plasma disposées le long de la plaque du matériau de protection thermique à tester pour mesurer l'évolution de la récession du matériau au cours d'un tir sur différentes zones de sollicitations.

Selon un autre aspect de l'invention, la plaque du matériau de protection thermique à tester comprend une pluralité de capteurs de mesure de température disposés le long de ladite plaque. Ces capteurs peuvent être répartis le long la plaque en plusieurs groupes, chaque capteur d'un groupe de capteurs étant implanté à une profondeur déterminée dans l'épaisseur de la plaque. Cela permet de mesurer les différents niveaux de sollicitations thermiques auxquelles la plaque est soumise aussi bien dans son épaisseur que sur sa longueur.

Les mesures collectées avec cette instrumentation vont permettre de caractériser précisément le comportement thermo-érosif des matériaux testés, de définir les conditions des essais ultérieurs en ajustant les niveaux de sollicitations et d'élaborer des méthodes de calcul pour un dimensionnement d'une protection thermique à l'échelle 1.

Selon encore un autre aspect de l'invention, le dispositif d'essai comprend des moyens pour ajuster la distance entre le bloc de propergol solide et la plaque du matériau de protection thermique à tester. De cette manière, le niveau de sollicitations aérothermiques dans le dispositif peut être simplement réglé par ajustement de la hauteur de la chambre de combustion, ce qui permet notamment de conserver un niveau de sollicitations similaire d'un tir à l'autre en réglant la pression de fonctionnement avec le diamètre au col de la tuyère.

Le dispositif d'essai thermo-érosif de la présente invention comprend en outre une coque cylindrique comportant un volume interne dans lequel sont disposés la plaque du matériau de protection thermique à tester et le bloc de propergol solide. Ainsi, en insérant le montage à géométrie rectangulaire comprenant la plaque de matériau à tester et le bloc de propergol dans une coque présentant une forme cylindrique, il est possible d'établir des pressions de fonctionnement représentatives de la gamme de fonctionnement des propulseurs à l'échelle 1. L'obtention de tels niveaux de pression avec une géométrie purement rectangulaire nécessiterait, pour résister aux efforts de pression, des épaisseurs de plaques de métal rédhibitoires que ce soit en termes de masse ou de coût. L'utilisation d'une coque selon l'invention confère au montage une forme externe cylindrique permettant une répartition uniforme des efforts de pression générés dans ce dernier qui peut être alors placé à l'intérieur d'un tube métallique d'épaisseur raisonnable.

Le tube dans lequel est placé le montage avec la coque est fermé à ses extrémités par un fond avant et un fond arrière, le fond arrière comportant la tuyère du dispositif d'essai qui est raccordée à la chambre de combustion définie par la veine entre la plaque et la face du bloc de propergol en regard.

Les faces du bloc de propergol solide autres que celle en regard de la plaque de matériau de protection thermique à tester sont de préférence recouvertes d'un matériau inhibiteur pour assurer une combustion frontale constante en regard de la plaque de matériau de protection thermique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'une plaque de matériau de protection thermique destinée à être utilisée dans le dispositif d'essai thermo-érosif selon un mode de réalisation de l'invention,
- la figure 2 est une vue en perspective d'une variante de réalisation de la plaque de matériau de protection thermique de la figure 1,
- les figures 3A et 3B montrent la préparation d'un bloc de propergol solide destiné à être utilisé dans le dispositif d'essai thermo-érosif selon un mode de réalisation de l'invention,
- la figure 4 montre la réalisation d'une coque cylindrique pour le dispositif d'essai thermo-érosif de l'invention,
- la figure 5 est une vue en perspective éclatée montrant l'assemblage d'une plaque de matériau de protection thermique et d'un bloc de propergol dans la coque cylindrique de la figure 4,
- la figure 6 montre les éléments de la figure 5 une fois assemblés entre eux,
- la figure 7 est une vue en perspective éclatée montrant l'assemblage d'un dispositif d'essai thermo-érosif selon un mode de réalisation de l'invention,
- la figure 8 est une vue en coupe du dispositif d'essai thermo-érosif après assemblage des éléments de la figure 7,
- la figure 9 est une vue en perspective montrant un dispositif d'essai thermo-érosif monté sur un banc d'essai.

### Description détaillée des modes de réalisation de l'invention

Le principe du dispositif d'essai thermo-érosif de la présente invention est d'exposer un échantillon de matériau de protection thermique à un écoulement tangentiel de gaz de combustion généré par un bloc de propergol solide parallélépipédique placé en vis-à-vis de l'échantillon.

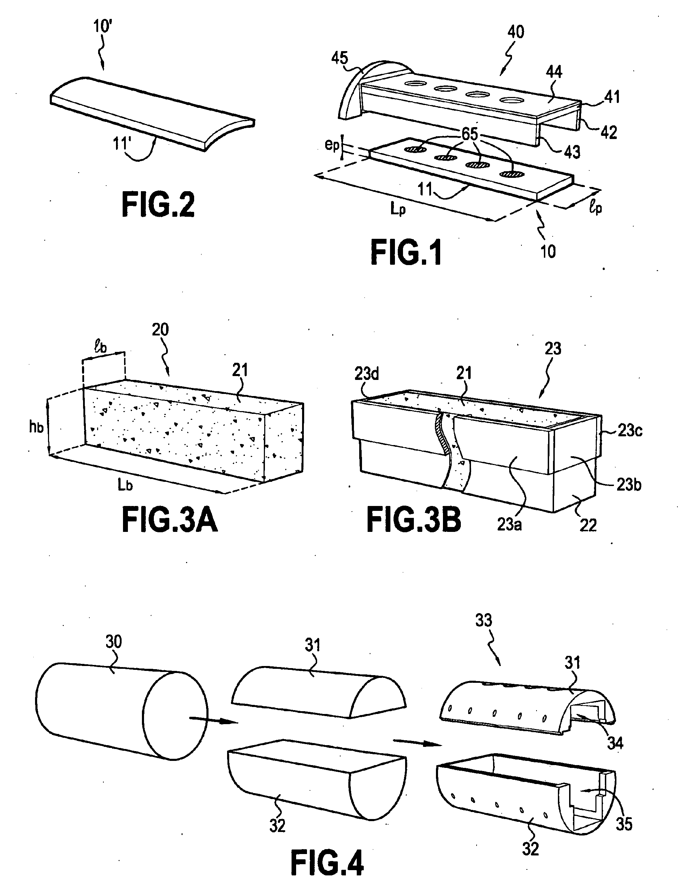

Selon un aspect de l'invention, l'échantillon de matériau de protection thermique à tester est réalisé sous forme d'une plaque. La figure 1 montre une plaque de matériau de protection thermique 10 formant l'échantillon de protection thermique à tester dans le dispositif de l'invention. La plaque 1 présente de préférence une géométrie plane suffisante pour se rapprocher des grands rayons de courbure rencontrés dans les propulseurs à l'échelle 1. Cette géométrie plane est la plus simple à réaliser et facilite l'intégration des moyens de mesure décrits plus loin ainsi que l'exploitation de l'essai. Toutefois, comme illustré sur la figure 2, la plaque de matériau de protection thermique 10' peut également présenter une légère courbure. D'une manière générale, la face 11 (réciproquement 11') de la plaque 10 (réciproquement 10') destinée à être placée en vis-à-vis de la face de combustion du bloc de propergol forme avec cette dernière une chambre de combustion parallélépipédique (avec la plaque 10 plane) ou sensiblement parallélépipédique (avec la plaque 10' légèrement courbée).

La longueur et la largeur de la chambre de combustion formée dans le dispositif entre la plaque et le bloc de propergol correspondent à celles de la plaque de matériau de protection thermique 10. La plaque 10 et, par conséquent, la chambre de combustion peuvent présenter, par exemple, une longueur Lₚ d'environ 800 mm et une largeur Iₚ d'environ 150 mm. Ces dimensions fixes sont définies en fonction d'un compromis entre la représentativité de l'échelle 1 et les contraintes de réalisation du dispositif. Ces dimensions auraient pu être supérieures mais des tests ont montrés qu'une longueur de 800 mm et une largeur de 150 mm étaient bien représentatives de l'échelle 1. La plaque 10 présente en outre une épaisseur eₚ d'environ 30 mm.

La plaque 10 est équipée, sur sa face supérieure, de jauges capacitives à plasma 65 dont le fonctionnement sera décrit plus loin. La plaque 10 est montée sur un support 40 qui comprend une paroi frontale en "demi-lune" 45 et trois parois planes 42, 43 et 44. La plaque 10 est en outre collée dans le support 40 sur un matériau de couplage 41 dont la fonction sera explicitée plus loin. Selon une variante, les parois 42, 43 et 44 peuvent être directement réalisées en matériau de couplage, le matériau de couplage 41 n'étant dans ce cas plus nécessaire.

La figure 3A illustre un bloc de propergol solide 20 de forme parallélépipédique destiné à être placé dans le dispositif de l'invention en regard de la plaque de matériau de protection thermique 10. Le bloc de propergol 20 présente une longueur L_{b} et une largeur l_{b} sensiblement identiques à celles de la plaque de matériau de protection thermique. La hauteur h_{b} du bloc est définie en fonction de la durée du tir à effectuer. Le bloc de propergol peut par exemple présenter une longueur L_{b} d'environ 800 mm, une largeur l_{b} d'environ 150 mm et une hauteur h_{b} d'environ 205 mm, ce qui correspond à une charge de propergol d'environ 50 kg.

Comme illustré sur la figure 3B, le bloc de propergol est ensuite préparé. Plus précisément, la face 21 du bloc de propergol 20 destinée à être placée en vis-à-vis de la face 11 de la plaque 10 constitue la seule face de combustion du bloc. Les autres faces du bloc 20 sont recouvertes d'un matériau inhibiteur 22, comme par exemple un vernis de finition polyuréthane chargé à l'oxamide, de manière à privilégier une combustion frontale du bloc et à conserver une surface de combustion constante au cours du tir. On obtient alors un bloc de propergol inhibé 23. Des plaques de renfort 23a à 23d sont en outre disposées au moins autour de la partie supérieure du bloc 23.

Le niveau de pression de fonctionnement dans le dispositif de l'invention doit être suffisamment élevé pour être représentatif de l'échelle 1. La pression dans le dispositif varie de 2 à 12 MPa environ. Cependant, la conservation d'une géométrie rectangulaire pour l'ensemble du montage nécessiterait, pour résister à de tels niveaux de pression, d'utiliser des épaisseurs de plaques de métal qui seraient rédhibitoires tant en termes de masse que de coût.

A cet effet, le dispositif de l'invention propose de ramener la forme extérieure du dispositif à une forme cylindrique en utilisant une coque formant une structure de bourrage pour combler l'espace entre l'ensemble plaque de matériau de protection thermique/bloc de propergol, formant la chambre de combustion parallélépipédique, et la virole ou tube externe du dispositif. Plus précisément comme représenté sur la figure 4, une coque 33 est réalisée à partir d'un cylindre 30, réalisé par exemple en vernis polyuréthane coulable à froid et usinable. Le cylindre 30 est ensuite séparé en deux demi-coques 31 et 32 dont l'intérieur est usiné de manière à former respectivement un logement 34 pour la plaque de matériau de protection thermique et un logement 35 pour le bloc de propergol

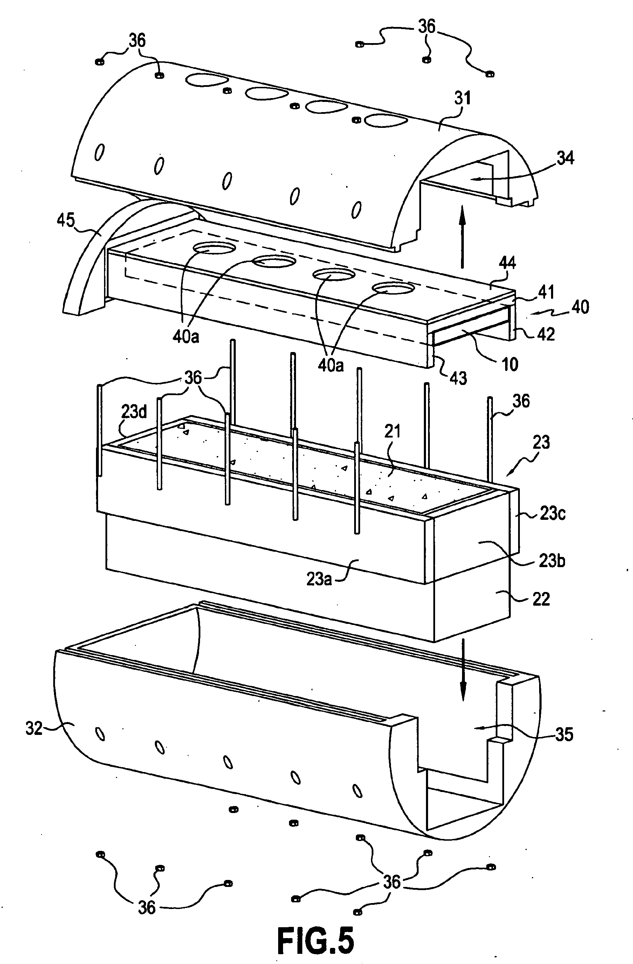

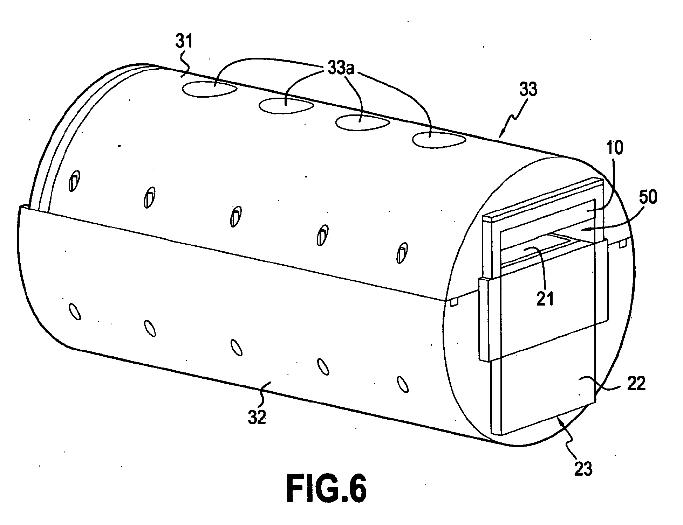

La figure 5 illustre le montage de la plaque de matériau de protection thermique et du bloc de propergol à l'intérieur de la coque cylindrique 33. Le bloc de propergol inhibé 23 est logé dans le volume 35 de la première demi-coque 32 tandis que la plaque de matériau de protection thermique 10 montée sur le support 40 est placé dans le volume 34 de la deuxième demi-coque 31. Les deux demi-coques 31 et 32 sont assemblées et maintenues l'une contre l'autre à l'aide d'un système tirants/écrous métalliques 36. Une fois les demi-coques assemblées comme représenté sur la figure 6, la plaque de matériau de protection thermique 10 est maintenue, dans la coque cylindrique 33, en regard du bloc de propergol inhibé 23, l'espace entre la plaque 10 et le bloc 23 délimitant une chambre de combustion 50 de forme parallélépipédique. Le bloc de propergol inhibé 23 n'est pas collé à la demi-coque 32. Il existe un jeu d'environ 1 mm entre le bloc et la demi-coque, ce qui permet, avec des aménagements dans les demi-coques, une mise en équipression des éléments d'aménagement à l'intérieur du dispositif.

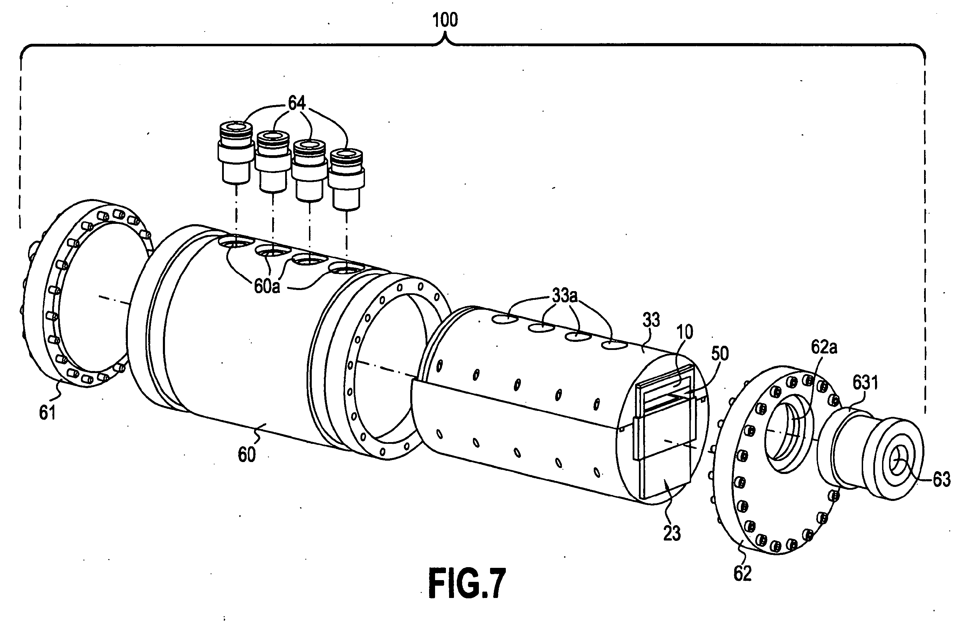

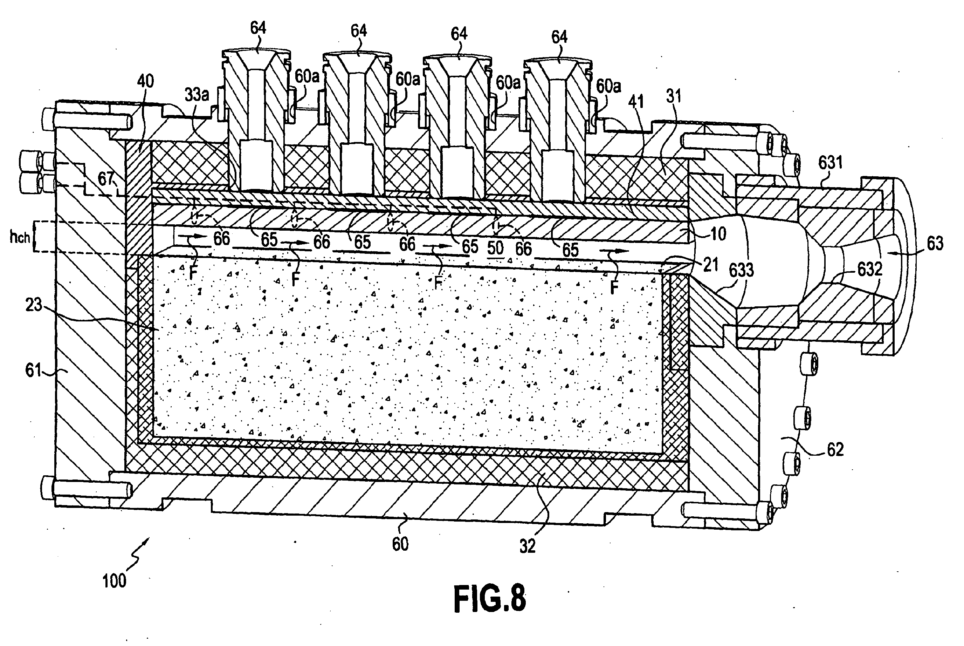

La figure 7 illustre l'assemblage du dispositif d'essai 100 de l'invention par la mise en place de la coque cylindrique 33 contenant la plaque de matériau de protection thermique et le bloc de propergol inhibé à l'intérieur d'un tube ou virole métallique 60 qui est fermé à ses extrémités par un fond avant 61 et un fond arrière 62 comportant une ouverture 62a à laquelle est connectée un porte tuyère 631 d'une tuyère 63. Le tube 60 comporte des ouvertures 64a destinées à coopérer avec des ouvertures 33a de la coque cylindrique 33 afin de permettre le montage de capteurs à ultrasons 64 dans le dispositif. Une fois le dispositif d'essai 100 assemblé comme illustré sur la figure 8, la chambre de combustion 50, formée entre la plaque de matériau de protection thermique 10 et le bloc de propergol 23, débouche dans la tuyère 63. Les gaz issus de la combustion du bloc de propergol 23 s'écoulent dans la chambre de combustion 50 suivant une direction de flux indiquée par les flèches F. L'adaptation entre la veine parallélépipédique de la chambre de combustion 50 et la tuyère 63 est réalisée par l'intermédiaire d'un raccord cylindro-conique 633. La pression dans la chambre de combustion 50 est réglée en fonction du diamètre du col 632 de la tuyère 63. Les matériaux utilisés pour le dispositif d'essai 100 sont choisis pour résister à des températures allant jusqu'à 3500 K.

Le niveau de sollicitations aérothermiques auquel est soumise la plaque de matériau de protection thermique 10 est fonction de la hauteur de la chambre de combustion h_{ch}. La hauteur h_{ch} est réglée par ajustement de la hauteur du bloc de propergol 23. Dans les cas où l'on souhaite effectuer plusieurs tirs d'une même durée mais avec différents niveaux de sollicitations, on utilise un fond mobile en dessous du bloc de propergol (non représentés sur les figures) qui permet d'utiliser des blocs ayant tous la même hauteur (i.e. même durée de tir) mais qui sont positionnés plus ou moins près de la plaque de matériau de protection thermique à tester suivant que l'on souhaite augmenter ou réduire le niveau de sollicitations aérothermiques.

Le dispositif d'essai selon l'invention est en outre équipé de capteurs pour mesurer différents paramètres permettant de caractériser le comportement thermo-érosif de la plaque de matériau de protection thermique à tester.

Comme illustré sur la figure 8, le dispositif comprend des capteurs à ultrasons 64 qui permettent de mesurer l'évolution du front de dégradation sur la plaque de matériau de protection thermique. Pour permettre une propagation des ondes ultrasonores dans la plaque de matériau de protection thermique 10 sans risque d'endommagement des capteurs, le support 40 de la plaque 10 comprend un matériau de couplage 41 interposé entre la plaque 10 et les capteurs 64. Le support 40 comporte en outre des ouvertures 40a coopérant avec les ouvertures 33a et 60a respectivement de la coque cylindrique 33 et du tube 60, ce qui permet au capteurs 64 d'être placés en contact du matériau de couplage 41. Chaque capteur à ultrasons 64 émet une onde sinusoïdale qui se réfléchit partiellement sur chaque interface de matériau caractérisée par un changement d'impédance acoustique (matériau couplage/matériau protection thermique, matériau protection thermique sain/coke et coke/gaz de combustion). Le capteur fait également office de récepteur des ondes réfléchies, permettant ainsi de déterminer l'évolution du temps de parcours de l'onde ultrasonore dans l'empilement au cours de l'essai. Connaissant la vitesse en fonction de la température de cette onde, il est possible de déterminer l'évolution temporelle de la position des différentes interfaces. On détermine ainsi l'évolution du front de dégradation (front de pyrolyse dans le matériau de protection thermique) au cours du temps durant un tir.

Le dispositif de l'invention comprend également des jauges capacitives à plasma 65 dont la section utile est de dimension proche de celle des capteurs à ultrasons 64 et placées aux mêmes positions que ces derniers. Le principe de mesure de ces jauges est basé sur la mesure de l'impédance capacitive de la plaque de matériau de protection thermique 10 entre deux électrodes, la première électrode étant constituée par une jauge 65 et la deuxième électrode étant constituée par le plasma conducteur généré par les gaz de combustion qui sont fortement ionisés. Cette mesure d'impédance peut être exploitée pour suivre l'évolution d'une zone proche de la surface 11 de la plaque 10 exposée à l'écoulement des gaz de combustion et en déduire l'évolution de la récession de la plaque.

La plaque de matériau de protection thermique 10 est en outre munie de capteurs de température 66 disposée le long de cette dernière et à différentes profondeurs. A titre d'exemple, lors de la fabrication de la plaque de matériau de protection thermique 10, on implante 16 capteurs de température, formés par exemple de thermocouples, qui sont répartis en 4 groupes sur 4 sections espacées le long de la plaque 10 et dont les signaux de mesure sont acheminés vers le fond avant 61 par des liaisons 67. Pour chaque section, les 4 thermocouples sont implantés à des profondeurs différentes dans la plaque. De cette manière, il est possible de connaître la température de la plaque à différents endroits et en particulier dans son épaisseur pour évaluer notamment son degré d'isolation thermique au cours du temps.

Le dispositif comprend une ou plusieurs prises de pression (non représentées sur les figures) qui permettent notamment de relever la pression au niveau de la tuyère et dans la chambre de combustion.

Le dispositif d'essai de l'invention comprend encore un allumeur pour initier la combustion du bloc de propergol ainsi qu'une ou plusieurs sécurités de pression dont le déclenchement est calibré à un niveau de pression maximum déterminé (non représentées sur les figures).

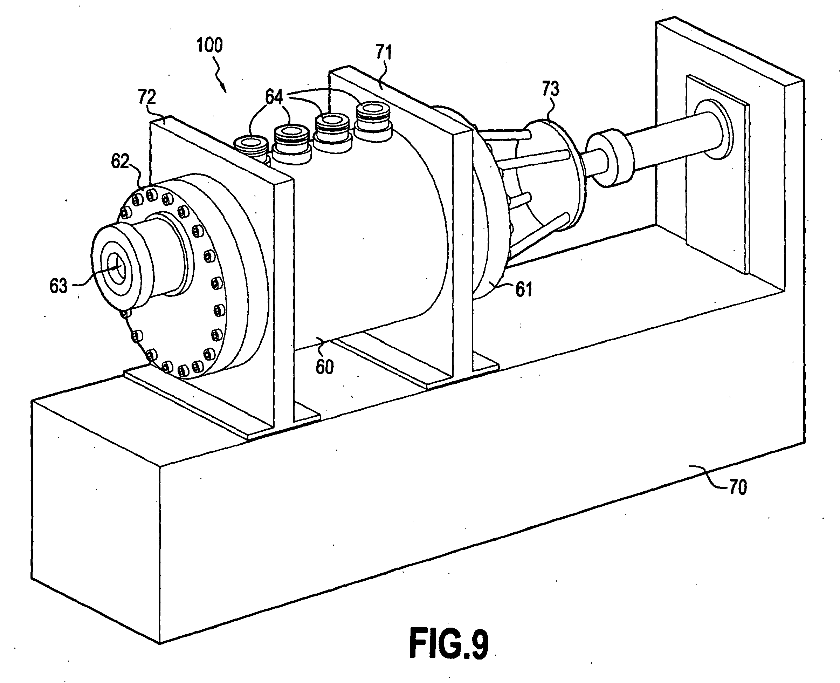

La figure 9 montre le dispositif d'essai de l'invention mis en place sur un banc d'essai 70. Le banc d'essai 70 comprend deux éléments 71 et 72 supportant le dispositif d'essai de l'invention. Le dispositif est en outre maintenu par un système 73 qui permet le passage des câbles des capteurs de mesure, de l'allumeur et de la ou les sécurités de pression.

Les dimensions et la configuration de la chambre de combustion du dispositif d'essai de la présente invention permettent de répondre aux besoins suivants :
- Restituer des sollicitations aérothermiques et radiatives représentatives d'un propulseur échelle 1.
- Balayer avec un seul tir les différents régimes de sollicitations vus dans un propulseur échelle 1 :
   ○ Dans la première moitié de la plaque, côté fond avant, on obtient des sollicitations typiques des zones de virole et de fond avant d'un propulseur.
   ○ Dans la deuxième moitié de la plaque, côté tuyère, on obtient des sollicitations typiques de fond arrière de propulseur en configuration braquée.

Au cours de tirs effectués avec le dispositif de l'invention tel que décrit précédemment, des calculs aérothermiques et de rayonnement ont permis de vérifier les points suivants :
- Absence d'impacts de particules d'alumine sur la plaque d'échantillon de matériau thermique à tester;
- Les niveaux de sollicitations (flux convectif et cisaillement pariétal) sur la plaque d'échantillon représentatifs de l'ensemble des conditions rencontrées par les protections thermiques internes dans des propulseurs échelle 1;
- L'existence d'une zone sur la plaque d'échantillon non influencée par la présence des parois latérales de la veine;
- L'absence d'influence de la combustion de l'aluminium du propergol sur le flux radiatif reçu par la plaque.

En outre, des calculs thermo-érosifs sur une plaque d'échantillon en GSM55 ont montré que le dispositif d'essai de l'invention permet de couvrir l'ensemble des régimes d'érosion du matériau :
- Le régime thermique non-érosif ou conductif : les sollicitations sont uniquement thermiques et le coke formé reste en place;
- Le régime d'érosion pulsé : cas intermédaire pour lequel le coke formé est érodé par plaques; et
- a Le régime érosif intense : cas de sévérité d'écoulement extrême pour lequel le coke formé est immédiatement érodé.

## Revendications

1. Dispositif d'essai thermo-érosif (100) de matériau de protection thermique destiné à être utilisé dans un propulseur à propergol solide,
**caractérisé en ce qu'**il comprend des moyens (33) pour maintenir une plaque (10) constituée du matériau de protection thermique à tester et un bloc de propergol solide (23), ladite plaque étant disposée en regard d'une face (21) dudit bloc de propergol solide (23), l'espace entre la plaque et la face du bloc de propergol définissant une chambre de combustion (50) de forme sensiblement parallélépipédique, ladite chambre s'étendant le long de ladite plaque (10) et débouchant dans une tuyère (63).

2. Dispositif selon la revendication 1, **caractérisé en ce qu'**il comprend des moyens pour mesurer l'évolution de la dégradation et de la récession de la surface de la plaque (10) du matériau de protection thermique à tester.

3. Dispositif selon la revendication 2, **caractérisé en ce qu'**il comprend une pluralité de capteurs à ultrasons (64) disposés le long de la plaque (10) du matériau de protection thermique à tester, lesdits capteurs étant couplés avec ladite plaque par un matériau de couplage (41).

4. Dispositif selon la revendication 2 ou 3, **caractérisé en ce qu'**il comprend une pluralité de jauges capacitives à plasma (65) disposées le long de la plaque (10) du matériau de protection thermique à tester.

5. Dispositif selon l'une quelconque des revendications 1 à 4, **caractérisé en ce que** la plaque (10) du matériau de protection thermique à tester comprend une pluralité de capteurs de mesure de température (66) disposés le long de ladite plaque.

6. Dispositif selon la revendication 5, **caractérisé en ce que** la plaque (10) du matériau de protection thermique à tester comprend plusieurs groupes de capteurs de mesure de température (66) espacés les uns des autres le long de ladite plaque, chaque capteur d'un groupe de capteurs étant implanté à une profondeur déterminée dans l'épaisseur de la plaque.

7. Dispositif selon l'une quelconque des revendications 1 à 6, **caractérisé en ce qu'**il comprend en outre des moyens pour ajuster la distance entre le bloc de propergol solide (23) et la plaque du matériau (10) de protection thermique à tester de manière à ajuster le niveau de sollicitations aérodynamiques dans la chambre de combustion (50) en fonction de ladite distance.

8. Dispositif selon l'une quelconque des revendications 1 à 7, **caractérisé en ce qu'**il comprend une coque cylindrique (33) comportant un volume interne (34, 35) dans lequel sont disposés la plaque (10) du matériau de protection thermique à tester et le bloc de propergol solide (23).

9. Dispositif selon la revendication 8, **caractérisé en ce qu'**il comprend un tube (60) recevant la coque cylindrique (33), ledit tube étant fermé à ses extrémités par un fond avant (61) et un fond arrière (62), le fond arrière (62) comportant une tuyère (63) raccordée à la chambre de combustion (50) définie par la veine entre la plaque (10) et la face (21) du bloc de propergol (23) en regard.

10. Dispositif selon la revendication 8, **caractérisé en ce que** les faces du bloc de propergol solide (23) autres que celle (21) en regard de la plaque (10) de matériau de protection thermique à tester sont recouvertes d'un matériau inhibiteur (22).

## Claims

1. A thermal erosion test device (100) for testing thermal protection materials for use in a solid propellant thruster, **characterized in that** it comprises means (33) for holding a plate (10) made of the thermal protection material for testing and a block (23) of solid propellant, said plate being placed facing a face (21) of said block (23) of solid propellant, the space between the plate and the face of the propellant block defining a combustion chamber (50) of substantially rectangular shape, said chamber extending along said plate (10) and opening out into a nozzle (63).

2. A device according to claim 1, **characterized in that** it includes means for measuring the variation in the degradation and the retreat of the surface of the plate (10) of thermal protection material for testing.

3. A device according to claim 2, **characterized in that** it includes a plurality of ultrasound sensors (64) disposed along the plate (10) of thermal protection material for testing, said sensors being coupled with said plate by a coupling material (41).

4. A device according to claim 2 or claim 3, **characterized in that** it includes a plurality of plasma capacitance gauges (65) disposed along the plate (10) of thermal protection material for testing.

5. A device according to any one of claims 1 to 4, **characterized in that** the plate (10) of thermal protection material for testing includes a plurality of temperature-measurement sensors (66) disposed along said plate.

6. A device according to claim 5, **characterized in that** the plate (10) of thermal protection material for testing includes a plurality of groups of temperature-measurement sensors (66) spaced apart from one another along said plate, each sensor in a group of sensors being implanted at a determined depth in the thickness of the plate.

7. A device according to any one of claims 1 to 6, **characterized in that** it further includes means for adjusting the distance between the block (23) of solid propellant and the plate (10) of thermal protection material for testing so as to adjust the level of aerodynamic stresses in the combustion chamber (50) as a function of said distance.

8. A device according to any one of claims 1 to 7, **characterized in that** it includes a cylindrical shell (33) having an inside volume (34, 35) in which there are placed the plate (10) of thermal protection material for testing, and the block (23) of solid propellant.

9. A device according to claim 8, **characterized in that** it comprises a tube (60) receiving the cylindrical shell (33), said tube being closed at its ends by a front end wall (61) and a rear end wall (62), the rear end wall (62) including a nozzle (63) connected to the combustion chamber (50) defined by the space between the plate (10) and the face (21) of the facing block (23) of propellant.

10. A device according to claim 8, **characterized in that** the faces of the block (23) of solid propellant other than the face (21) facing the plate (10) of thermal protection material for testing are covered in an inhibitor material (22).

## Patentansprüche

1. Vorrichtung für zur wärme-erosiven Prüfung (100) von Wärmeabschirmungsmaterial, das für die Verwendung in einer Feststoffrakete vorgesehen ist, **dadurch gekennzeichnet**, sie Mittel (33) umfaßt, um eine Platte (10) zu erhalten, die aus zu prüfendem Wärmeabschirmungsmaterial und einem Festtreibstoffblock (23) besteht, wobei die Platte gegenüber einer Seite (21) des Festtreibstoffblocks (23) angeordnet ist, wobei der Raum zwischen der Platte und der Seite des Treibstoffblocks eine Verbrennungskammer (50) mit im wesentlichen Parallelpipedform definiert, wobei sich die Kammer entlang der Platte (10) erstreckt und in einer Düse (63) mündet.

2. Vorrichtung nach Anspruch 1, **dadurch gekennzeichnet, daß** sie Mittel umfaßt, um die Entwicklung der Funktionsminderung und des Oberflächenrückgangs der Platte (10) aus zu prüfendem Wärmeabschirmungsmaterial zu messen.

3. Vorrichtung nach Anspruch 2, **dadurch gekennzeichnet, daß** sie mehrere Utraschallsensoren (64) umfaßt, die entlang der Platte (10) aus zu prüfendem Wärmeabschirmungsmaterial angeordnet sind, wobei die Sensoren mit der Platte über ein Kopplungsmaterial (41) gekoppelt sind.

4. Vorrichtung nach Anspruch 2 oder 3, **dadurch gekennzeichnet, daß** sie mehrere kapazitive Plasmaaufnehmer (65) umfaßt, die entlang der Platte (10) aus zu prüfendem Wärmeabschirmungsmaterial angeordnet sind.

5. Vorrichtung nach einem der Ansprüche 1 bis 4, **dadurch gekennzeichnet, daß** die Platte (10) aus zu prüfendem Wärmeabschirmungsmaterial mehrere Temperaturmeßsensoren (66) umfaßt, die entlang der Platte angeordnet sind.

6. Vorrichtung nach Anspruch 5, **dadurch gekennzeichnet, daß** die Platte (10) aus zu prüfendem Wärmeabschirmungsmaterial mehrere Gruppen von Temperaturmeßsensoren (66) umfaßt, die entlang der Platte voneinander beabstandet sind, wobei jeder Sensor einer Sensorgruppe in einer bestimmten Tiefe in der Dicke der Platte eingebettet ist.

7. Vorrichtung nach einem der Ansprüche 1 bis 6, **dadurch gekennzeichnet, daß** sie ferner Mittel umfaßt, um den Abstand zwischen dem Festtreibstoffblock (23) und der Platte (10) aus zu prüfendem Wärmeabschirmungsmaterial anzupassen, um das Niveau der aerodynamischen Belastungen in der Verbrennungskammer (50) in Abhängigkeit von dem Abstand anzupassen.

8. Vorrichtung nach einem der Ansprüche 1 bis 7, **dadurch gekennzeichnet, daß** es eine zylinderförmige Schale (33) umfaßt, die ein Innenvolumen (34, 35) beinhaltet, in dem die Platte (10) aus zu prüfendem Wärmeabschirmungsmaterial und der Festtreibstoffblock (23) angeordnet sind.

9. Vorrichtung nach Anspruch 8, **dadurch gekennzeichnet, daß** sie ein Rohr (60) umfaßt, das die zylinderförmige Schale (33) aufnimmt, wobei das Rohr an seinen Enden durch einen vorderen Boden (61) und einen hinteren Boden (62) geschlossen ist, wobei der hintere Boden (62) eine Düse (63) beinhaltet, die an die Verbrennungskammer (50) angeschlossen ist, die durch den Gang zwischen der Platte (10) und der Seite (21) des gegenüberliegenden Festtreibstoffblocks (23) definiert ist.

10. Vorrichtung nach Anspruch 8, **dadurch gekennzeichnet, daß** die Seiten des Festtreibstoffblocks (23), abgesehen von der Seite (21), die der Platte (10) aus zu prüfendem Wärmeabschirmungsmaterial gegenüber liegt, mit einem Inhibitormaterial (22) bedeckt sind.
